# EUROPEAN PATENT SPECIFICATION

(11) **EP 2 066 002 B1**
(45) Date of publication and mention of the grant of the patent: **03.04.2013**
(21) Application number: 08101786.5
(22) Date of filing: 20.02.2008
(51) Int. Cl.: H02J 7/14, B60L 11/18

(54) **Public transport vehicle, method of use and battery pack for said vehicle**
Öffentliches Transportfahrzeug, Verwendungsverfahren und Batteriepack für das Fahrzeug
Véhicule de transport public, procédé d'utilisation et bloc-batterie pour ce véhicule

(30) Priority: 21.02.2007 FR 0701228
(43) Date of publication of application: 03.06.2009
(73) Proprietor: Iveco France S.A., 69200 Vénissieux (FR)
(72) Inventor: Gendre, Guy Pierre, 69003 Lyon (FR)
(74) Representative: Borsano, Corrado

(56) References cited:
- EP-A1- 1 717 945
- DE-A1-102005 019 116
- US-A- 5 675 232
- US-A- 5 796 175

## Description

The present invention relates to a public transport vehicle, a method of use and a battery pack for said vehicle.

Public transport vehicles exist which include:
- a DC bus formed by two conductors between which various electric charges on board said vehicle are connected in parallel, said electric charges being devised to function under a nominal direct voltage V_{DCnom}, one of said charges being an inverter able to feed a propulsion engine in the vehicle, and
- a battery connected to the DC bus to feed the various charges with electric energy stored in said battery, said battery having between its terminals a voltage V_{Bmax} when the battery is fully charged and a voltage V_{Bmin} when the battery is discharged, the voltages V_{Bmax} and V_{Bmin} being measured when the battery is electrically connected to the DC bus.

Battery as used here refers to an accumulator which delivers continuous current by converting chemical energy into electrical energy. As the conversion process is reversible, it is also possible to store electrical energy in the battery. This kind of battery may be formed by a single battery from the terminals of which electrical energy is taken directly, or by a group of several batteries connected in series or in parallel, the electrical energy in this case being taken from the terminals of said group. In this description and in the set of claims, the term battery is used to indicate both a single battery and a group of batteries connected in series and/or in parallel. If the battery is formed by a group of batteries, each element of this group is here referred to as "rechargeable electric cell" in order to avoid using the same term to refer to the group and to the individual elements within said group.

EP 1 717 945 discloses a vehicle according to the preamble of claim 1; US 5 675 232 discloses a battery pack including a battery and a step down DC-DC converter.

In existing vehicles the nominal voltage V_{Bnom} of the battery is chosen as near or equal to the voltage V_{DCnom}. Typically, the V_{Bnom} voltage is also equal to 70% or 80% of the V_{Bmax} voltage. Thus, the V_{DCnom} voltage is also equal to 70% or 80% of the voltage V_{Bmax}. Typically, the V_{Bmin} voltage is around 33% of the V_{Bmax} voltage. In such conditions, throughout almost the entire working range of the battery, the voltage V_{B} at the terminals of the battery is strictly lower than the V_{DCnom} voltage. Consequently, to discharge the battery on the DC bus, a step-up converter must be used, for example. The invention refers to a vehicle according to claim 1 and to a battery pack according to claim 10.

These existing vehicles function correctly. However, it would now be advantageous to increase even further the amount of energy per unit of time that can be transferred from the battery to the DC bus. This invention thus aims to propose a public transport vehicle which has an increased capacity for transferring the electrical energy stored in the battery to the DC bus.

The object of the invention is therefore a public transport vehicle wherein:
- the V_{DCnom} voltage is systematically lower than 33% of the V_{Bmax} voltage, and
- the vehicle includes a controllable step-down DC-DC converter that is connected on one side to the battery terminals and on the other side to the DC bus, said step-down converter being able to deliver to the DC bus the electrical energy stored in the battery, under a voltage equal to the V_{DCnom} voltage .

A voltage lower than 33% of the V_{Bmax} voltage corresponds roughly to the residual voltage at the terminals of the battery when the latter is completely discharged or nearly discharged. Thus, in the aforesaid vehicle, since the V_{DCnom} voltage is less than 33% of the V_{Bmax} voltage, only the step-down converter is used to deliver the energy stored in the battery to the DC bus under a voltage that is equal or very close to the V_{Dcnom} voltage. Now, a step-down converter of equal complexity can transfer much higher quantities of energy per unit of time than a step-up converter. Thus, in this vehicle, there is a greater capacity for transferring stored electrical energy from the battery to the DC bus.

Furthermore, this choice of V_{Bmax} voltage also makes it possible to prolong the lifespan of the batteries, as the energy stored in the battery can be used even if the voltage between the terminals is close to the V_{Bmin} voltage.

The embodiments of the aforementioned vehicle may comprise one or several of the following characteristics:
- the battery and the controllable step-down converter are integrated in the same battery pack forming a single removable piece, and said battery pack and the DC bus comprise complementary connectors that can be attached to each other so as to electrically connect the battery pack to the DC bus and, alternately, to be detached from each other so as to allow the battery pack to be removed from the vehicle;
- a non-volatile rewritable memory containing a setting V_{config} that is able to take several different values, and a control unit that is able to control the step-down converter so that it delivers the energy stored in the battery to the DC bus under a voltage that is determined according to the value of the V_{config} setting, and
- a configuration unit able to adjust the value of the V_{config} setting even before the battery pack has been electrically connected to the DC bus;
- the battery is formed by at least two rechargeable electric cells, having a V_{Pmax} voltage when it is fully charged, said V_{Pmax} voltage being strictly higher than twice the V_{DCnom} voltage for each of the rechargeable electric cells, the V_{Pmax} voltage being measured when the battery is electrically connected to the DC bus;
- the step-down converter is able to cut a discharge current of the battery circulating from the battery to the DC bus, and the vehicle has a controllable circuit breaker that is able to cut the discharge and charge current to electrically isolate the battery from the DC bus, and a control unit able to control the step-down converter to cut the discharge current and maintain this discharge current cut-off for a pre-set length of time, and to control the opening of the circuit breaker according to the step-down converter control, in order to ensure that the circuit breaker is opened when the amperage of the discharge current is nil;
- the step-down converter is a chopper/step-down converter able to lower the voltage at the battery terminals to deliver the electrical energy stored in the battery under a voltage that is equal to the V_{DCnom} voltage, by chopping the discharge current;
- the vehicle also comprises a step-up DC-DC converter connected on one side to the battery terminals and, on the other, to the DC bus, said step-up converter being able to increase the voltage of the DC bus to deliver electrical energy to be stored in the battery under a V_{DCcharge} voltage strictly higher than the V_{DCnom} voltage, and in which the vehicle comprises a control unit for the step-up converter to regulate the V_{DCcharge} voltage according to a voltage that is currently measured at the terminals of the battery;
- the vehicle may comprise a voltage clipper connected to the DC bus, said clipper being able to systematically maintain the voltage on the DC bus lower than or equal to a V_{DCmax} voltage beyond which the electric charges connected to the DC bus risk being damaged, said V_{Dcmax} voltage being strictly higher than the V_{DCnom} voltage.

These embodiments of the vehicle also have the following advantages:
- the use of a battery pack forming a single removable piece allows the battery pack to be easily replaced by another one, and offers the option of recharging the battery pack without having to use the DC bus,
- the use of the V_{config} setting allows the same battery pack to be used in different vehicles equipped with DC buses with different V_{DCnom} voltages,
- using a battery made up of at least two rechargeable cells connected in series makes it easier to control the charge of said battery and to use said cells, than if they were connected in parallel,
- the inclusion of a control unit able to control the step-down converter to cut off the discharge current and then control the opening of the circuit breaker simplifies the design of said circuit breaker, as the cut-off power of the latter will only be used in the case of a power outage or, conversely, of having a very high-performing cut-off device,
- using a chopper/step-down converter to lower the voltage allows the overall dimensions to be reduced, with equal performance,
- regulating the V_{Dccharge} voltage makes it possible to regulate the amperage of the charge current of the battery according to its charge status, represented by voltage V_{B}, and thus to protect the battery against excessively strong charge currents, and
- the voltage clipper connected to the DC bus ensures that the various electric charges connected to said bus will not be degraded due to an overvoltage.

A further object of the invention is a method of use of the aforementioned public transport vehicle. This method comprises a stage in which the stored energy is released from the battery on the DC bus, in which, systematically during the entire energy-release stage, only the step-down converter is used.

A further object of the invention is a battery pack that is able to be used in the aforementioned public transport vehicle.

The invention will be better understood in the light of the following description, given purely by way of nonlimiting example and with reference to the drawings, in which:
- figure 1 is a schematic illustration of the architecture of a public transport vehicle, and
- figure 2 is a flow chart of a method of use of the vehicle in figure 1.

In the remainder of this description the characteristics and functions that are well known to those skill in the art will not be described in detail.

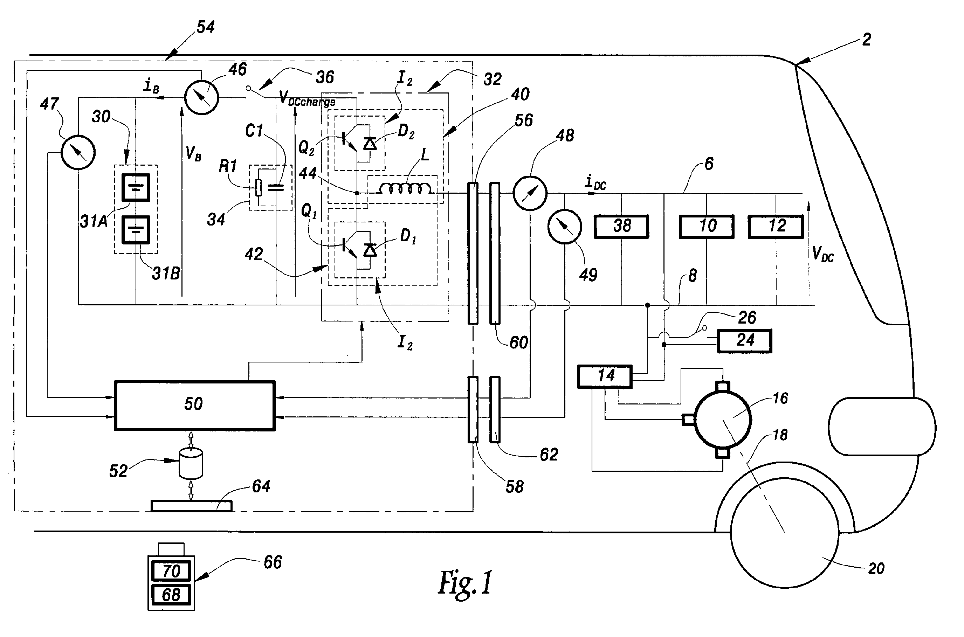

Figure 1 shows a public transport vehicle 2 such as, for example, a bus, streetcar, tram or other.

Vehicle 2 comprises a DC bus formed by two electric conductors 6, 8 between which are connected various electric charges to be fed by direct voltage. In order to simplify the drawing only two charges, 10 and 12, have been shown. The electric charges could be air-conditioners, auxiliary electric charges such as hydraulic pumps, or a transformer suitable to feed a further on-board electric network with a lower voltage. One of the charges could also be a further electrical energy accumulator such as a supercapacitor.

Each of the electric charges is designed to work under a nominal functioning voltage V_{DCnom}. For example, in the vehicle 2, said voltage V_{Dcnom} is above 300 volts DC and preferably above or equal to 350 volts DC.

The electric charges also have a voltage V_{Dcmax} beyond which the voltage risks degrading. Here, for example, the voltage V_{Dcmax} is above or equal to 400 volts DC.

In the embodiment shown in figure 1, an inverter/rectifier 14 is connected on one side, between the conductors 6 and 8 and on the other side to a propulsion engine 16 of the vehicle 2. For example, the engine 16 is a three-phase motor/alternator equipped with a shaft 18 suitable to drive in rotation at least one drive wheel 20 of the vehicle 2. The engine 16 is also suitable to function as an alternator in order to produce alternating voltage.

The inverter/rectifier 14 is also connected to a main source of electrical energy 24. Hence, when the inverter/rectifier 14 functions as an inverter, it is suitable to feed the engine 16 from the power source 24 and/or from the DC bus. Conversely, when the inverter/rectifier 14 functions as a rectifier, the alternating voltage generated by the engine 16, when the shaft 18 is driven in rotation by the wheel 20, is transformed into direct voltage delivered onto the DC bus. An interrupter 26 allows the source 24 to be disconnected from the inverter/rectifier 14 when the latter functions as a rectifier.

Here, when the inverter/rectifier 14 functions as an inverter connected to the DC bus, it is considered as an electric charge connected to said DC bus.

A battery 30 is also connected between the conductors 6 and 8 and by means of a DC-DC converter 32.

When the battery 30 is completely charged, it has between its terminals a voltage V_{BmaX} when it is connected to the converter 32. Conversely, when said battery 30 is completely discharged, the voltage between its terminals is equal to V_{Bmin}. In practice, the voltage V_{Bmin} is never nil. Typically, voltage V_{Bmin} is less than 33% of the V_{Bmax} voltage and generally, in the range of voltage used, of 20% of the V_{Bmax} voltage. Here, the nominal voltage V_{Bnom} of the battery 30 is between 70% and 80% of the V_{Bmax} voltage. For example, here the nominal voltage V_{Bnom} is equal to 80% of the V_{Bmax} voltage.

In this embodiment the battery 30 is chosen so that it has a V_{Bmin} voltage that is strictly higher than the V_{DCnom} voltage and, for example, V_{Dmin} is at least 1.5 times higher than the V_{DCnom} voltage .

The value of the V_{Bmax} voltage varies according to the age of the battery 30, i.e. depending on the number of charge and discharge cycles that have taken place. However, it is always possible to choose a battery 30 with V_{Bmin} voltage which will definitely always be strictly higher than the V_{DCnom} voltage, even near the end of the battery life.

Here, the battery 30 is created by connecting in series two rechargeable electric cells 31A and 31B. Similarly to that described for the battery 30, each of the cells 31A and 31B has a maximum voltage V_{Pmax} when it is fully charged, and a minimum voltage V_{Pmin} when it is completely discharged. The voltages V_{Pmax} and V_{Pmin} are measured when the battery 30 is electrically connected to the DC bus. In order to obtain a V_{Bmin} voltage at least twice as high as the V_{DCnom} voltage, here, the cells 31A and 31B are chosen so that their respective V_{Pmax} voltages are each three times as high as V_{DCnom}.

Here, the battery 30 is a NiMH (Nickel Metal Hybrid) battery or a lithium battery.

An RC filter 34 is connected in parallel to the terminals of the converter 32 between the battery 30 and said converter 32 so as to filter the voltage produced by the converter 32. Here, said filter 34 is formed by a capacitor C1 connected in parallel to a resistance R1.

A controllable circuit breaker 36 is also included between the battery 30 and the converter 32 so as to be able to isolate the battery 30 from the group of charges connected to the DC bus.

A voltage clipper 38 is connected to the conductors 6 and 8. Said clipper 38 is able to clip the voltage contained on the DC bus when it exceeds the V_{DCmax} voltage. Typically, for this purpose the clipper dissipates the excess electrical energy on the DC bus in, for example, a rheostat.

The converter 32 includes a chopper/step-down converter 40 as well as a chopper/step-up converter 42.

Here, the chopper/step-down converter 40 is able to lower the voltage V_{B} at the terminals of the battery 30 to deliver the electrical energy stored in the battery 30 to the DC bus under a voltage V_{DC} that is near or equal to the voltage V_{DCnom}. Said chopper/step-down converter is also able to cut a discharge current from the battery 30 to the DC bus when its amperage is higher than 100 amperes and preferably higher than 300 amperes.

Here, the chopper/step-down converter 40 is made with the use of an inductor L connected in series with a controllable interrupter I₂. More specifically, one end of the inductor L is directly connected to one end of the conductor 6 while its other end 44 is connected to a first side of the interrupter I₂. The other side of the interrupter I₂ is connected to the positive terminal of the battery 30.

For example, the interrupter I₂ includes a diode D₂ the anode of which is connected to the end 44 of the inductor L, and a transistor Q₂, connected in parallel to the terminals of the diode D₂. The transmitter of the transistor Q₂ is connected to the end 44 of the inductor L. The transistor Q₂ is, for example, an IGBT transistor (Insulated Gate Bipolar Transistor).

The chopper/step-up converter 42 is able to increase the voltage V_{DC} in the DC bus to produce a voltage V_{Dccharge} at the terminals of the RC filter 34.

For this purpose, the chopper/step-up converter 42 is formed by the inductor coil L and a controllable interrupter I₁ connected on one side to the end 44 and on the other to the conductor 8.

For example, the structure of the interrupter I₁ is identical to that of the interrupter I₂ except for the fact that the diode and the transistor are numbered D₁ and Q₁ respectively.

An ammeter 46 and a voltmeter 47 are also envisaged to measure, respectively, the charge i_{B} or discharge current of the battery 30, and the voltage V_{B} at the terminals of the battery 30.

An ammeter 48 and a voltmeter 49 are envisaged to measure, respectively, the amperage of the current i_{DC} passing through the conductor 6 and the voltage V_{DC} between the conductors 6 and 8.

Lastly, the vehicle 2 includes a control unit 50 for the converter 32 and the circuit breaker 36. For this purpose, said unit 50 is electrically connected to the ammeters 46 and 48 as well as to the voltmeters 47 and 49. Unit 50 is also connected to a non-volatile and rewritable memory 52 containing notably a setting V_{config} the importance of which will become clear in the light of this description.

In this embodiment, the battery 30, the converter 32, the filter 34, the circuit breaker 36, the ammeter 46, the voltmeter 47, the control unit 50 and the memory 52 are included in a battery pack 54 forming a single removable piece. For this purpose, the battery pack 54 includes connectors 56 and 58 that can be attached and, alternately, detached from complementary connectors 60 and 62. Here, the connectors 56 and 60 allow the battery 30 to be electrically connected to the conductors 6 and 8 by means of the converter 32, while the connectors 58 and 62 allow the ammeter 48 and the voltmeter 49 to be electrically connected to the control unit 50.

Lastly, the pack 54 also includes an interface 64 connected to the memory 52. Said interface 64 allows a removable configuration unit 66 to be connected and disconnected alternately. The unit 66 also makes it possible to memorise a new value for the V_{config} setting in the memory 52. For this purpose the unit 66 is, for example, equipped with a keyboard 68 and, possibly, a screen 70. Here, the unit 66 is independent from the battery pack 54 and from the vehicle 2.

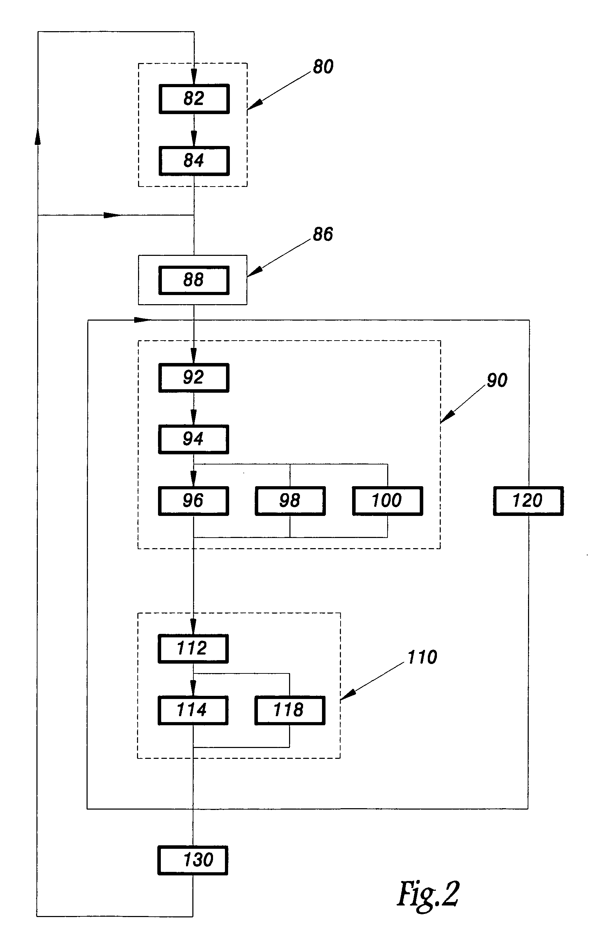

The functioning of the vehicle 2 shall now be described with reference to figure 2.

The method begins with a stage 80 in which the battery pack 54 is configured before being assembled inside the vehicle 2. For this purpose, in a step 82, the configuration unit 66 is connected to an interface 64. Then, in step 84, the configuration unit registers a new value for the setting V_{config}. Here, this new value for the setting V_{config} is equal to the voltage V_{DCnom} of the DC bus in vehicle 2.

Next, the unit 6 is disconnected from the interface 64 and, in step 86, the battery pack 54 is installed inside the vehicle. In step 86, with an operation 88, the connectors 56 and 58 are attached to connectors 60 and 62 of the vehicle 2 to electrically connect the battery pack 54 to the DC bus and to the ammeter 48 and the voltmeter 49.

The vehicle 2 can now begin to make use of the battery pack 54.

Let us recall that when the battery pack 54 is in use, the voltage clipper 58 continuously clips the V_{DC} voltage so that it is always lower than the V_{Dcmax} voltage.

Here we suppose that, initially, the battery 30 is charged. Hence, the method can continue with a step 90 in which the energy stored in the battery 30 is released to feed the various charges connected to the DC bus of the vehicle 2.

At the beginning of step 90, the unit 50 deactivates the chopper/step-up converter 42, in step 92. For example, during step 92, the unit 50 controls the opening of the transistor Q1, then maintains this transistor open for the entire duration of step 90.

Next, in step 94, the unit 50 controls the chopper/step-down converter 40 to lower the voltage V_{B} at the terminals of the battery 30 so as to deliver the energy stored in said battery under a voltage equal to the setting V_{config}. In this step 84, the frequency by which the current i_{B} is cut by the transistor Q2 is regulated according to the voltage V_{B} measured by the voltmeter 47 and to the value of the setting V_{config} recorded in the memory 52. It is therefore clear that the battery pack 54 can be connected to DC buses of different vehicles which have different V_{DCnom} voltages, simply by adjusting the value of the setting V_{config} before connecting the battery pack 54 to the vehicle.

Next, in step 96, the various charges connected to the DC bus consume the electrical energy supplied by the battery 30. For example, a part of the electrical energy supplied by the battery 30 is used by the engine 16 to rotate the drive wheels.

In parallel to step 96, in step 98, the unit 50 also estimates the state of charge of the battery 30 by measuring the amount of electrical energy supplied to the DC bus from the battery 30. This amount of energy can be estimated using measurements of amperage i_{B} and voltage V_{B}.

Also in parallel to steps 96 and 98, in step 100, the unit 50 monitors the value of the measured V_{DC} voltage. If it should exceed a pre-set threshold S₁, the unit 50 automatically stops step 90 and automatically proceeds to a step 110 in which energy is stored in the battery 30. In effect, raising the V_{DC} voltage means that a surplus of energy is available on the DC bus and it is therefore wise to store this energy surplus in the battery 30. This rise in the V_{DC} voltage could be caused by the vehicle 2 braking with the help of the engine 16. Indeed, when such braking takes place, the engine 16 functions as an alternator and therefore produces a three-phase current which is then rectified by the rectifier 14 and delivered to the DC bus.

At the beginning of step 110, with step 112, the step-down converter is deactivated. For example, the unit 50 controls the opening of the transistor Q2 and maintains said transistor open for the entire duration of step 110.

Next in step 114, the unit 50 controls the chopper/step-up converter 42 to generate a voltage V_{DCcharge} which is strictly higher than the V_{DC} voltage present at the same time on the DC bus. More specifically, the unit 50 controls the chopper/step-up converter 42 in relation to the V_{DC} voltage and the V_{B} voltage measured as well as in relation to the estimate of the state of charge of the battery 30 in order to determine the most appropriate value of the V_{DCcharge} voltage for recharging the battery 30. Indeed, regulating the value of the V_{DCcharge} voltage according to the aforementioned measurements and the state of charge of the battery makes it possible to set the amperage of the current i_{B}, since this amperage depends on the difference between the V_{B} voltage and the V_{DCcharge} voltage. For example, if the state of charge is low, the battery 30 can be charged with the use of a current i_{B} with a high amperage and in this case, the unit 50 controls the chopper/step-up converter 42 so that the V_{DCcharge} voltage is significantly higher than the V_{B} voltage. Conversely, if the state of charge of the battery 30 is already high, the amperage of the current i_{B} must be kept low so as not to damage the battery 30. Consequently, the unit 50 controls the chopper/step-up converter 42 so that the V_{DCcharge} voltage is only slightly higher than the V_{B} voltage.

Thus, in step 114, the battery 30 is recharged while at the same time controlling the amperage of the current i_{B}.

Simultaneously to step 114, in step 118, the unit 50 also continues to update the estimate of the state of charge of the battery 30 calculated using the amperage of the current i_{B} and the V_{B} voltage measured.

Stage 110 continues as long as the V_{DC} voltage is higher than the threshold S₁. When this condition is not fulfilled, the method returns to stage 90.

Simultaneously to steps 90 and 110, at any moment the unit 50 may proceed to a stage 120 of electrical isolation of the battery 30 from the DC bus. During this stage 120, unit 50 controls the opening of the transistors Q1 and Q2 simultaneously, and maintains these transistors open while the circuit breaker 36 is not open. This allows very effective protection, as the cutting time of the transistors Q1 and Q2 is a thousand times shorter than that of the circuit breaker 36. In such conditions, the amperage of the discharge current is nil and unit 50 can control the opening of the circuit breaker 36 at that point.

For the purposes of maintenance or in order to recharge the battery 54 in a way other than using the DC bus, it is possible to proceed to step 130 in which the battery pack 54 is removed from the vehicle 2. In this step 130, the connectors 56 and 58 are detached from their corresponding connectors 60 and 62 and the battery pack 54 is removed from the vehicle 2. The battery pack 54 may then be recharged from an electricity source that is independent from the vehicle 2, by connecting said source to the battery 30 by means of the connector 56.

At the end of step 130 it is possible to either return to stage 80 in order to reset the battery pack 54 so hat it can be installed in another vehicle, or return directly to step 86 to reinstall the battery pack 54 in the vehicle 2.

Numerous other embodiments are possible. For example, the chopper/step-down converter 40 or the chopper/step-up converter 42 may include various branches in parallel to interrupters I₁ or I₂. In these conditions, for the same power transmitted from the battery 30 to the DC bus, the converter can work at a much higher frequency of cutting. This allows the size of the inductor L to be reduced.

As a variation, the connectors 56, 58, 60 and 62 are omitted if the battery pack 54 is not required to be removable.

The configuration unit 66 can also be integrated inside the battery pack 54 or inside the vehicle 2.

## Claims

1. Public transport vehicle including :
- a DC bus (8) formed by two conductors (6, 8) between which various electric charges (10, 12, 14) onboard said vehicle are connected in parallel, said electric charges being designed to function under a nominal direct voltage V_{DCnom}, one of said charges (14) being an inverter suitable to feed a propulsion engine of said vehicle, and
- a battery (30) connected to the DC bus to feed the various charges with electrical energy stored in said battery, said battery having between its terminals a voltage V_{Bmax} when the battery is fully charged, and a voltage V_{Bmin} when the battery is discharged, voltages V_{Bmax} and V_{Bmin} being measured when the battery is electrically connected to the DC bus
**characterised in that**:
- the voltage V_{DCnom} is systematically lower than 33% of the voltage V_{Bmax}, and
- the vehicle has a controllable step-down DC-DC converter (40) connected on one side to the terminals of the battery (30) and on the other side, to the DC bus, said step-down converter being able to deliver onto the DC bus the electrical energy stored in the battery under a voltage equal to the voltage V_{DCnom}.

2. Vehicle according to claim 1, in which:
- the battery (30) and the controllable step-down converter (40) are integrated in the same battery pack (54) forming a single removable piece, and
- said battery pack (54) and the DC bus have complementary connectors (56, 58, 60, 62) suitable to be attached to each other so as to electrically connect the battery pack to the DC bus and, alternately, to be detached from each other to allow the battery pack to be removed from the vehicle.

3. Vehicle according to claim 2, wherein the battery pack (54) includes:
- a non-volatile rewritable memory (52) containing a setting V_{config} able to take several different values, and
- a control unit (50) able to control the step-down converter so that it delivers the energy stored in the battery to the DC bus under a voltage that is determined according to the value of the setting V_{config}, and
- in which the vehicle comprises a configuration unit (66) allowing the value of the setting V_{config} to be adjusted even before the battery pack has been electrically connected to the DC bus.

4. Vehicle according to any one of the previous claims, wherein the battery (30) is formed by at least two rechargeable electric cells (31 A, 31 B) connected in series, each rechargeable cell having a voltage V_{Pmax} when it is completely charged, said voltage V_{Pmax} being strictly higher than twice the V_{DCnom} voltage for each of the rechargeable electric cells, the voltage V_{Pmax} being measured when the battery is electrically connected to the DC bus.

5. Vehicle according to any one of the previous claims, wherein the step-down converter (40) is able to cut a discharge current of the battery circulating from the battery to the DC bus, and wherein the vehicle comprises a controllable circuit breaker (36) able to cut the discharge and charge current in order to electrically isolate the battery from the DC bus, and a control unit (50) able to control the step-down converter to cut the discharge current and maintain said discharge current cut off for a pre-set length of time, and to control the opening of the circuit breaker according to the control of the step-down converter, so as to ensure that the circuit breaker is opened when the amperage of the discharge current is nil.

6. Vehicle according to any one of the previous claims, wherein the step-down converter (40) is a chopper/step-down converter able to lower the voltage at the terminals of the battery (30) to deliver the electrical energy stored in the battery under a voltage equal to the V_{DCnom} voltage by chopping the discharge current.

7. Vehicle according to any one of the previous claims, wherein the vehicle also comprises a step-up DC-DC converter (42) connected, on one side, to the terminals of the battery and, on the other side, to the DC bus, said step-up converter being able to increase the voltage of the DC bus to deliver electrical energy to be stored in the battery under a voltage V_{DCcharge} strictly higher than the V_{DCnom} voltage, and wherein the vehicle includes a control unit (50) for the step-up converter in order to adjust the V_{DCcharge} voltage according to a voltage measured at that moment at the battery terminals.

8. Vehicle according to any one of the previous claims, wherein the vehicle comprises a voltage clipper (38) connected to the DC bus, said clipper being able to systematically maintain the voltage on the DC bus lower than or equal to a voltage V_{DCmax} beyond which the electric charges (10, 12, 14) connected to the DC bus risk being degraded, the voltage V_{DCmax} being strictly higher than the voltage V_{DCnom}.

9. Method of use of a public transport vehicle according to any one of the previous claims, said method including a stage (90) in which the energy stored in the battery (30) is release onto the DC bus, **characterised in that**, systematically, for the entire duration of the stage of energy released, only the step-down converter is used.

10. Battery pack forming a single removable piece that can be used in a vehicle according to any one of claims 1 to 8, said pack including a battery (30) able to be connected to the DC bus to feed the various electric charges with electrical energy stored in the battery, said battery having between its terminals a voltage V_{Bmax} when the battery is fully charged, and a voltage V_{Bmin} when the battery is discharged, voltages V_{Bmax} and V_{Bmin} being measured when the battery is electrically connected to the DC bus, **characterised in that**:
- the voltage V_{DCnom} is systematically lower than 33% of the voltage V_{Bmax}, and
- the battery pack also comprises:
connectors (56, 58) suitable to be attached to complementary connectors (60, 62) that are joined to the DC bus so as to electrically connect the battery pack to the DC bus and, alternately, to be detached from the complementary connectors so as to allow the battery pack to be removed from the vehicle, and a step-down DC-DC converter (40) connected on one side to the terminals of the battery, and on the other side, to the connectors (56, 58), said step-down converter being a chopper able to deliver onto the DC bus the electrical energy stored in the battery under a voltage equal to the voltage V_{DCnom}.

## Patentansprüche

1. Fahrzeug für den öffentlichen Transport, das umfasst:
- einen Gleichspannungsbus (8) der durch zwei Leiter (6, 8) ausgebildet ist, zwischen welchen verschiedene elektrische Frachten (10, 12, 14) an Bord des Fahrzeugs parallel verbunden sind, wobei die elektrischen Frachten so konstruiert sind, dass sie mit einer Nenn-Gleichspannung V_{DCnom} funktionieren, wobei eine der Frachten (14) ein Gleichrichter/Wechselrichter ist, der geeignet ist, um eine Vortriebskraftmaschine des Fahrzeugs zu versorgen, und
- eine Batterie (30), die mit dem Gleichspannungsbus verbunden ist, um die verschiedenen Frachten mit elektrischer Energie zu versorgen, die in der Batterie gespeichert ist, wobei die Batterie zwischen ihren Anschlüssen eine Spannung V_{Bmax}, wenn die Batterie vollständig aufgeladen ist, und eine Spannung V_{Bmin}, wenn die Batterie entladen ist, aufweist, wobei die Spannungen V_{Bmax} und V_{Bmin} gemessen werden, wenn die Batterie mit dem Gleichspannungsbus elektrisch verbunden ist,
**dadurch gekennzeichnet , dass**:
- die Spannung V_{DCnom} systematisch niedriger als 33 % der Spannung V_{Bmax} ist, und
- das Fahrzeug einen steuerbaren DC/DC-Abwärtswandler (40) aufweist, der an einer Seite mit den Anschlüssen der Batterie (30) und an der anderen Seite mit dem Gleichspannungsbus verbunden ist, wobei der Abwärtswandler in der Lage ist, die in der Batterie gespeicherte elektrische Energie mit einer Spannung, die gleich der Spannung V_{DCnom} ist, an den Gleichspannungsbus zu liefern.

2. Fahrzeug nach Anspruch 1, bei dem:
- die Batterie (30) und der steuerbare Abwärtswandler (40) in den gleichen Batteriestapel (54) so integriert sind, dass sie ein einziges entfernbares Teil bilden, und
- der Batteriestapel (54) und der Gleichspannungsbus komplementäre Verbinder (56, 58, 60, 62) aufweisen, die zur Befestigung aneinander geeignet sind, um den Batteriestapel mit dem Gleichspannungsbus elektrisch zu verbinden, und alternativ zum Trennen voneinander geeignet sind, um zu ermöglichen, dass der Batteriestapel aus dem Fahrzeug entfernt wird.

3. Fahrzeug nach Anspruch 2,
wobei der Batteriestapel (54) umfasst:
- einen nichtflüchtigen wiederbeschreibbaren Speicher (52), der eine Einstellung V_{config} enthält, die mehrere verschiedene Werte annehmen kann, und
- eine Steuerungseinheit (50), die in der Lage ist, den Abwärtswandler so zu steuern, dass er die in der Batterie gespeicherte Energie an den Gleichspannungsbus mit einer Spannung liefert, die in Übereinstimmung mit dem Wert der Einstellung V_{config} bestimmt wird, und
- bei dem das Fahrzeug eine Konfigurationseinheit (66) umfasst, die ermöglicht, dass der Wert der Einstellung V_{config} auch dann verstellt werden kann, bevor der Batteriestapel mit dem Gleichspannungsbus elektrisch verbunden worden ist.

4. Fahrzeug nach einem beliebigen der vorherigen Ansprüche, wobei die Batterie (30) durch mindestens zwei wiederaufladbare elektrische Zellen (31A, 31B) gebildet ist, die in Reihe verbunden sind, wobei jede wiederaufladbare Zelle eine Spannung V_{Pmax} aufweist, wenn sie vollständig aufgeladen ist, wobei die Spannung V_{Pmax} für jede der wiederaufladbaren elektrischen Zellen grundsätzlich höher als das Doppelte der Spannung von V_{DCnom} ist, wobei die Spannung V_{Pmax} gemessen wird, wenn die Batterie mit dem Gleichspannungsbus elektrisch verbunden ist.

5. Fahrzeug nach einem beliebigen der vorherigen Ansprüche, wobei der Abwärtswandler (40) in der Lage ist, einen Entladestrom aus der Batterie, der von der Batterie an den Gleichspannungsbus zirkuliert, zu unterbrechen, und wobei das Fahrzeug einen steuerbaren Schaltungsunterbrecher (36), der zum Unterbrechen des Entlade- und Aufladestroms in der Lage ist, um die Batterie vom Gleichspannungsbus elektrisch zu isolieren, und eine Steuerungseinheit (50) umfasst, die in der Lage ist, den Abwärtswandler so zu steuern, dass der Entladestrom unterbrochen wird und die Unterbrechung des Entladestroms für eine voreingestellte Zeitspanne aufrecht erhalten wird, und um das Öffnen des Schaltungsunterbrechers in Übereinstimmung mit der Steuerung des Abwärtswandlers so zu steuern, dass sichergestellt ist, dass der Schaltungsunterbrecher geöffnet ist, wenn die Stromstärke des Entladestroms Null ist.

6. Fahrzeug nach einem beliebigen der vorstehenden Ansprüche, wobei der Abwärtswandler (40) ein Zerhacker/Abwärtswandler ist, der in der Lage ist, die Spannung an den Anschlüssen der Batterie (30) abzusenken, um die in der Batterie gespeicherte elektrische Energie mit einer Spannung zu liefern, die gleich der Spannung V_{DCnom} ist, indem er den Entladestrom zerhackt.

7. Fahrzeug nach einem beliebigen der vorstehenden Ansprüche, wobei das Fahrzeug auch einen DC/DC-Aufwärtswandler (42) umfasst, der an einer Seite mit den Anschlüssen der Batterie verbunden ist und an der anderen Seite mit dem Gleichspannungsbus verbunden ist, wobei der Aufwärtswandler in der Lage ist, die Spannung des Gleichspannungsbusses zu erhöhen, um elektrische Energie, die in der Batterie gespeichert werden soll, mit einer Spannung V_{DCcharge} zu liefern, die grundsätzlich höher als die Spannung V_{DCnom} ist, und wobei das Fahrzeug eine Steuerungseinheit (50) für den Aufwärtswandler umfasst, um die Spannung V_{DCcharge} gemäß einer Spannung einzustellen, die in diesem Augenblick an den Batterieanschlüssen gemessen wird.

8. Fahrzeug nach einem beliebigen der vorstehenden Ansprüche, wobei das Fahrzeug einen Spannungsbegrenzer (38) umfasst, der mit dem Gleichspannungsbus verbunden ist, wobei der Begrenzer in der Lage ist, die Spannung an dem Gleichspannungsbus systematisch niedriger als eine oder gleich einer Spannung V_{DCmax} zu halten, über welcher die mit den Gleichspannungsbus verbundenen elektrischen Frachten (10, 12, 14) eine Verschlechterung riskieren, wobei die Spannung V_{DCmax} grundsätzlich höher als die Spannung V_{DCnom} ist.

9. Verfahren zur Verwendung eines Fahrzeugs für den öffentlichen Transport nach einem beliebigen der vorstehenden Ansprüche, wobei das Verfahren eine Phase (90) umfasst, bei welcher die in der Batterie (30) gespeicherte Energie auf den Gleichspannungsbus freigesetzt wird, **dadurch gekennzeichnet , dass** während der gesamten Dauer der Phase der Energiefreisetzung systematisch nur der Abwärtswandler verwendet wird.

10. Batteriestapel, der ein einziges entfernbares Teil bildet, das in einem Fahrzeug nach einem beliebigen der Ansprüche 1 bis 8 verwendet werden kann, wobei der Batteriestapel eine Batterie (30) umfasst, die mit dem Gleichspannungsbus verbunden werden kann, um die verschiedenen elektrischen Frachten mit elektrischer Energie zu versorgen, die in der Batterie gespeichert ist, wobei die Batterie zwischen ihren Anschlüssen eine Spannung V_{Bmax}, wenn die Batterie vollständig aufgeladen ist, und eine Spannung V_{Bmin}, wenn die Batterie entladen ist, aufweist, wobei die Spannungen V_{Bmax} und V_{Bmin} gemessen werden, wenn die Batterie mit dem Gleichspannungsbus elektrisch verbunden ist,
**dadurch gekennzeichnet , dass**:
- die Spannung V_{DCnom} systematisch niedriger als 33 % der Spannung V_{Bmax} ist und
- der Batteriestapel außerdem umfasst:
Verbinder (56, 58), die zur Befestigung an komplementären Verbindern (60, 62) geeignet sind, die mit dem Gleichspannungsbus verbunden sind, um den Batteriestapel mit dem Gleichspannungsbus elektrisch zu verbinden, und alternativ geeignet sind, um von den komplementären Verbindern getrennt zu werden, um zu ermöglichen, dass der Batteriestapel aus dem Fahrzeug entfernt wird, und einen DC-DC-Abwärtswandler (40), der an einer Seite mit den Anschlüssen der Batterie und an der andere Seite mit den Verbindern (56, 58) verbunden ist, wobei der Abwärtswandler ein Zerhacker ist, der in der Lage ist, die in der Batterie gespeicherte elektrische Energie mit einer Spannung, die gleich der Spannung V_{DCnom} ist, an den Gleichspannungsbus zu liefern.

## Revendications

1. Véhicule de transport public incluant :
- un bus C.C. (8) formé par deux conducteurs (6, 8) entre lesquels diverses charges électriques (10, 12, 14) à bord dudit véhicule sont connectées en parallèle, lesdites charges électriques étant conçues pour fonctionner sous une tension continue nominale V_{DCnom}, l'une desdites charges (14) étant un onduleur approprié pour alimenter un moteur de propulsion dudit véhicule, et
- une batterie (30) connectée au bus C.C. pour alimenter les diverses charges en énergie électrique stockée dans ladite batterie, ladite batterie ayant entre ses bornes une tension V_{Bmax} lorsque la batterie est chargée complètement, et une tension V_{Bmin} lorsque la batterie est déchargée, les tensions V_{Bmax} et V_{Bmin} étant mesurées lorsque la batterie est électriquement connectée au bus C.C.
**caractérisé en ce que** :
- la tension V_{DCnom} est systématiquement inférieure à 33 % de la tension V_{Bmax}, et
- le véhicule comporte un convertisseur continu-continu abaisseur de tension commandable (40) connecté d'un côté aux bornes de la batterie (30) et, de l'autre côté, au bus C.C., ledit convertisseur abaisseur de tension étant capable de délivrer au bus C.C. l'énergie électrique stockée dans la batterie sous une tension égale à la tension V_{DCnom}.

2. Véhicule selon la revendication 1, dans lequel :
- la batterie (30) et le convertisseur abaisseur de tension commandable (40) sont intégrés dans le même bloc-batterie (54) formant une pièce amovible unique, et
- ledit bloc-batterie (54) et le bus C.C. ont des connecteurs complémentaires (56, 58, 60, 62) appropriés pour être attachés l'un à l'autre de façon à connecter électriquement le bloc-batterie au bus C.C. et, alternativement, pour être détachés l'un de l'autre pour permettre au bloc-batterie du véhicule d'être enlevé.

3. Véhicule selon la revendication 2, dans lequel le bloc-batterie (54) inclut :
- une mémoire réinscriptible non volatile (52) contenant un réglage V_{config} capable de prendre plusieurs valeurs différentes, et
- une unité de commande (50) capable de commander le convertisseur abaisseur de tension de sorte qu'il délivre l'énergie stockée dans la batterie au bus C.C. sous une tension qui est déterminée selon la valeur du réglage V_{config}, et
- dans lequel le véhicule comprend une unité de configuration (66) permettant à la valeur de réglage V_{config} d'être ajustée même avant que le bloc-batterie ait été électriquement connecté au bus C.C.

4. Véhicule selon l'une quelconque des revendications précédentes, dans lequel la batterie (30) est formée par au moins deux cellules électriques rechargeables (31A, 31B) connectées en série, chaque cellule rechargeable ayant une tension V_{Pmax} lorsqu'elle est complètement chargée, ladite tension V_{Pmax} étant strictement supérieure à deux fois la tension V_{DCnom} pour chacune des cellules électriques rechargeables, la tension V_{Pmax} étant mesurée lorsque la batterie est électriquement connectée au bus C.C.

5. Véhicule selon l'une quelconque des revendications précédentes, dans lequel le convertisseur abaisseur de tension (40) est capable de couper un courant de décharge de la batterie circulant de la batterie au bus C.C., et dans lequel le véhicule comprend un disjoncteur commandable (36) capable de couper le courant de décharge et de charge afin d'isoler électriquement la batterie du bus C.C., et une unité de commande (50) capable de commander le convertisseur abaisseur de tension pour couper le courant de décharge et maintenir ledit courant de décharge coupé pendant une durée préétablie, et pour commander l'ouverture du disjoncteur selon la commande du convertisseur abaisseur de tension, de façon à s'assurer que le disjoncteur soit ouvert lorsque l'ampérage du courant de décharge est nul.

6. Véhicule selon l'une quelconque des revendications précédentes, dans lequel le convertisseur abaisseur de tension (40) est un convertisseur hacheur/abaisseur de tension capable d'abaisser la tension aux bornes de la batterie (30) pour délivrer l'énergie électrique stockée dans la batterie sous une tension égale à la tension V_{DCnom} en hachant le courant de décharge.

7. Véhicule selon l'une quelconque des revendications précédentes, dans lequel le véhicule comprend également un convertisseur continu-continu élévateur de tension (42) connecté, d'un côté, aux bornes de la batterie et, de l'autre côté, au bus C.C., ledit convertisseur élévateur de tension étant capable d'augmenter la tension du bus C.C. pour délivrer de l'énergie électrique devant être stockée dans la batterie sous une tension V_{DCcharge} strictement supérieure à la tension V_{DCnom}, et dans lequel le véhicule inclut une unité de commande (50) pour le convertisseur élévateur de tension afin d'ajuster la tension V_{DCcharge} selon une tension mesurée à ce moment aux bornes de la batterie.

8. Véhicule selon l'une quelconque des revendications précédentes, dans lequel le véhicule comprend un écrêteur de tension (38) connecté au bus C.C., ledit écrêteur étant capable de maintenir systématiquement la tension sur le bus C.C. inférieure ou égale à une tension V_{DCmax} au-delà de laquelle les charges électriques (10, 12, 14) connectées au bus C.C. risquent d'être dégradées, la tension V_{DCmax} étant strictement supérieure à la tension V_{DCnom}.

9. Procédé d'utilisation d'un véhicule de transport public selon l'une quelconque des revendications précédentes, ledit procédé incluant une phase (90) dans laquelle l'énergie stockée dans la batterie (30) est libérée sur le bus C.C., **caractérisé en ce que**, systématiquement, pendant la durée entière de la phase de libération d'énergie, seul le convertisseur abaisseur de tension est utilisé.

10. Bloc-batterie formant une pièce amovible unique qui peut être utilisée dans un véhicule selon l'une quelconque des revendications 1 à 8, ledit bloc incluant une batterie (30) capable d'être connectée au bus C.C. pour alimenter les diverses charges électriques en énergie électrique stockée dans la batterie, ladite batterie ayant entre ses bornes une tension V_{Bmax} lorsque la batterie est chargée complètement, et une tension V_{Bmin} lorsque la batterie est déchargée, les tensions V_{Bmax} et V_{Bmin} étant mesurées lorsque la batterie est électriquement connectée au bus C.C., **caractérisé en ce que** :
- la tension V_{DCnom} est systématiquement inférieure à 33 % de la tension V_{Bmax},
et
- le bloc-batterie comprend également :
des connecteurs (56, 58) appropriés pour être attachés à des connecteurs complémentaires (60, 62) qui sont joints au bus C.C. de façon à connecter électriquement le bloc-batterie au bus C.C. et, alternativement, pour être détachés des connecteurs complémentaires de façon à permettre au bloc-batterie du véhicule d'être enlevé, et un convertisseur continu-continu abaisseur de tension (40) connecté d'un côté aux bornes de la batterie, et de l'autre côté, aux connecteurs (56, 58), ledit convertisseur abaisseur de tension étant un hacheur capable de délivrer au bus C.C. l'énergie électrique stockée dans la batterie sous une tension égale à la tension V_{DCnom}.
